Europäisches Patentamt

European Patent Office

Office européen des brevets

(11) Veröffentlichungsnummer: **0 257 218**
A2

# (12) EUROPÄISCHE PATENTANMELDUNG

(21) Anmeldenummer: 87108660.9

(22) Anmeldetag: 16.06.87

(51) Int. Cl.⁴: **F27B 9/30** , F27D 7/00

(30) Priorität: 09.08.86 DE 3627050

(43) Veröffentlichungstag der Anmeldung:
02.03.88 Patentblatt 88/09

(84) Benannte Vertragsstaaten:
FR GB NL

(71) Anmelder: **Hans Lingl Anlagenbau und Verfahrenstechnik GmbH & Co. KG
Albrecht-Berblinger-Strasse 6
D-7910 Neu-Ulm(DE)**

(72) Erfinder: **Mueller, Max
Im Waeldle 7
D-7913 Senden(DE)**

(54) Tunnelofen zum reduzierenden Brennen von Vormauerziegeln.

(57) Bei einem aus Einfahrtschleuse, Aufheiz-, Brenn-, und Kühlzone bestehenden Tunnelofen ist die Kühlzone in eine Indirektkühlzone und eine Direktkühlzone unterteilt, wobei die beiden Zonen durch ein Tor dichtend voneinander getrennt sind. Am Eingang der Indirektkühlzone wird Heißgas abgeleitet, durch einen Wärmeaustauscher geführt und abgekühlt, am Ausgang dieser Zone wieder eingeblasen. In der Direktkühlzone wird hinter dem Tor Heißluft abgesaugt und nahe dem Ausgang des Ofens Kühlluft zugeführt.

EP 0 257 218 A2

## Tunnelofen zum reduzierenden Brennen von Vormauerziegeln

Die Erfindung betrifft einen Tunnelofen zum reduzierenden Brennen von Vormauerziegeln gemäß dem Oberbegriff des Patentanspruchs I.

Beim reduzierenden Brand wird das Gegenstrom-Wärmetauscher-Prinzip des normalen Tunnelofens außer Kraft gesetzt, und es müssen andere Maßnahmen ergriffen werden, um die in der Kühlzone anfallende Wärme vom Ofen abzuführen.

Es ist bekannt, durch zusätzliche Aufgabe von Brennstoff am Ende der Brennzone bei gleichzeitiger Zurücknahme der von der Kühlzone in die Brennzone strömenden Luftmenge durch Reduzierung der Rauchgasabsaugung im Bereich des Übergangs von der Brennzone zur Kühlzone eine reduzierende Atmosphäre im Brennkanal zu - schaffen. Um zu verhindern, daß reduzierende Gase in die Kühlzone des Ofens zurückströmen und dort mit der HeiBluft zum Beispiel zum Trockner abgesogen werden, muß auch die Kühlluftabsaugung am Ofen reduziert werden.

Weil während der Reduktionsphase die in der Kühlzone des Ofens nach wie vor anfallende Wärme abgeführt werden muß, kann das Reduzieren nur kurzzeitig mit längeren Oxydationspausen erfolgen, in denen der Ofen normal durchspült und die in der Kühlzone anfallende Wärme abgeführt wird.

Ferner ist keine scharfe Abgrenzung der Kühlzone von der Reduktionszone möglich, da die Reduktionsgase in der Übergangszone aufbrennen und eine Reoxydation der Steinoberfläche bewirken, die nur mangelhaft kontrolliert werden kann.

Aufgabe der Erfindung ist es daher, einen Tunnelofen so zu verbessern, daß ohne Unterbrechung reduziert werden kann, während die in der Kühlzone des Ofens anfallende Wärme abgeführt wird, und daß eine scharfe Trennung zwischen Reduktionszone und Kühlzone möglich ist.

Die Aufgabe wird erfindungsgemäß durch die im kennzeichnenden Teil des Anspruchs I beschriebenen Maßnahmen gelöst.

Durch die Erfindung wird erreicht, daß kontinuierlich reduziert wird, eine Reoxydation nicht stattfindet und daß eine gleichbleibende gute Reduktion der Vormauerziegel erreicht wird. Ferner findet eine scharfe Trennung zwischen Reduktionszone und der direkt mit Luft beaufschlagten Kühlzone in einem Temperaturbereich statt, in dem ein Aufbrennen und Reoxydation nicht mehr möglich sind.

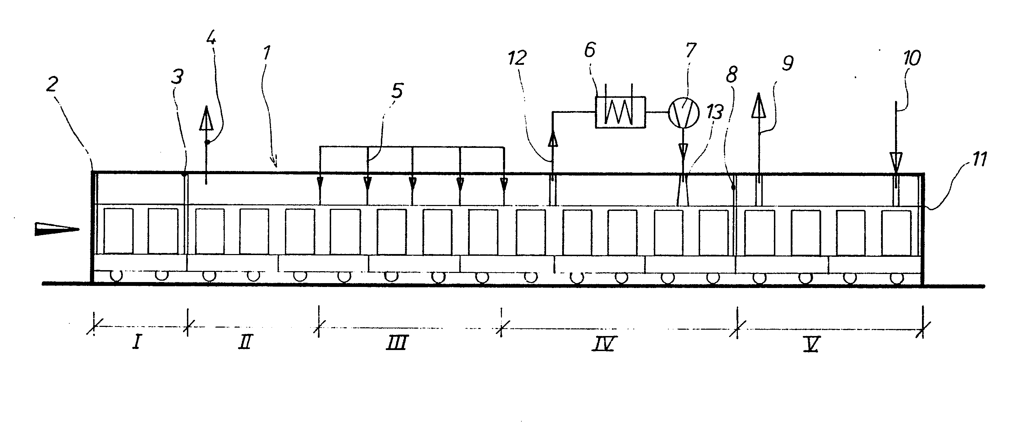

Ein Ausführungsbeispiel der Erfindung ist in der Zeichnung dargestellt und wird im folgenden näher beschrieben:

Die Zeichnung zeigt einen schematischen Schnitt durch den Tunnelofen.

Ein Tunnelofen I, bestehend aus Einfahrtschleuse I, Aufheizzone II, Brennzone III, Indirektkühlzone IV und Direktkühlzone V ist an der Einfahrt mit einem Schleusentor 2 versehen, das bis zum Boden reicht. Am Ende der Schleuse I befindet sich ein Ofeneinfahrttor 3, das bis auf das Ofenwagenplateau herabreicht. Im Anfangsbereich der Aufheizzone II ist eine Rauchgasabsaugung 4 vorgesehen, die seitlich oder über die Decke angebracht ist. In der Brennzone III sind über Kopf oder seitlich in den Ofenwänden Brenner 5 vorgesehen, die oxydierend oder reduzierend betrieben werden können. Im Bereich der Indirektkühlzone IV werden über eine der Brennzone III nahe gelegene Ableitung I2 Heißgase vom Ofen abgesaugt, durch einen Wärmetauscher 6 abgekühlt und mittels eines Ventilators 7 über eine der Direktkühlzone V nahe gelegene Zuleitung I3 in die Indirektkühlzone IV wieder eingeblasen. Ein Tor 8, das für höhere Temperaturen geeignet ist und mit dem Ofenwagenplateau und den Ofenwänden dichtend abschließt, ist zwischen der Indirektkühlzone IV und der Direktkühlzone V vorgesehen und soll eine Anreicherung der Atmosphäre in der Brennzone III und der Indirektkühlzone IV mit Sauerstoff verhindern

In der Direktkühlzone V ist hinter dem Tor 8 eine Heißlufabsaugung 9 und nahe dem Ausgang eine Lufteinblasung IO vorgesehen, mit der Kaltluft in die Direktkühlzone V zur gleichmäßigen Verteilung gedrückt wird.

Der Ofenausgang II kann mit oder ohne Tor ausgeführt werden.

## Ansprüche

I. Tunnelofen mit einer Einfahrtschleuse, einer Aufheizzone, einer Brennzone und einer Kühlzone zum reduzierenden Brennen von Vormauerziegeln, dadurch gekennzeichnet, daß die Kühlzone des Ofens (I) in eine Indirektkühlzone (IV) und eine Direktkühlzone (V) unterteilt ist, die durch ein einen dichtenden Abschluß bildendes Tor (8) voneinander getrennt sind, wobei im Bereich der Indirektkühlzone Heißgase abgeführt und nach Abkühlung wieder zugeführt werden, während im Bereich der Direktkühlzone Heißluft abgeführt und Kühlluft zugeführt wird.

2. Tunnelofen nach Anspruch I, dadurch gekennzeichnet, daß im Bereich der Indirektkühlzone (IV) nahe der Brennzone (III) eine Ableitung (I2) angebracht ist, über die Heißgase aus dem Ofen (I) abgesaugt, durch einen Wärmeaustauscher (6) geleitet und abgekühlt mittels eines Ventilators (7) über eine nahe der Direktkühlzone (V) gelegene Zuleitung (I3) wieder in den Ofen eingeblasen werden, und daß im Bereich der Direktkühlzone (V) hinter dem Tor (8) eine Heißluftabsaugleitung (9) sowie nahe dem Ofenausgang (II) eine Kühlluftzuführleitung (IO) vorgesehen sind.

3. Tunnelofen nach Anspruch I,
dadurch gekennzeichnet,
daß der Ofenausgang (II) mit einem Tor versehen ist.

0 257 218